(19) Europäisches Patentamt

European Patent Office

Office européen des brevets

(11) Veröffentlichungsnummer: **0 239 005 B1**

(12) **EUROPÄISCHE PATENTSCHRIFT**

(45) Veröffentlichungstag der Patentschrift: **23.12.92**

(51) Int. Cl.⁵: **H01K 1/50**

(21) Anmeldenummer: **87104031.7**

(22) Anmeldetag: **19.03.87**

(54) **Halogenglühlampe.**

(30) Priorität: **24.03.86 DE 3610922**

(43) Veröffentlichungstag der Anmeldung:
**30.09.87 Patentblatt 87/40**

(45) Bekanntmachung des Hinweises auf die
Patenterteilung:
**23.12.92 Patentblatt 92/52**

(84) Benannte Vertragsstaaten:
**DE FR GB IT**

(56) Entgegenhaltungen:
**DE-B- 1 188 201**
**FR-A- 1 337 937**
**GB-A- 1 327 479**
**US-A- 3 644 773**

(73) Patentinhaber: **Patent-Treuhand-Gesellschaft**
**für elektrische Glühlampen mbH**
**Hellabrunner Strasse 1**
**W-8000 München 90(DE)**

(72) Erfinder: **Kiesel, Rolf**
**Hegelstrasse 49**
**W-7080 Aalen(DE)**
Erfinder: **Blum, Karl**
**Böhmenkircher Strasse 36**
**W-7924 Söhnstetten(DE)**

**Beschreibung**

Die Erfindung geht aus von einer Halogenglühlampe mit einem transparenten vakuumdicht verschlossenen Kolben und mit einem oder mehreren Leuchtkörpern aus Wolfram sowie mit einer Füllung aus Inertgas und einem Zusatz, der in Form eines oder mehrerer halogenierter Kohlenwasserstoffe und ggf. auch anderer halogenhaltiger Verbindungen eingegeben ist, wobei als Halogene Jod sowie Brom und/oder Chlor vorhanden sind.

Es ist bekannt, die Schwärzung des Lampenkolbens durch halogenhaltige Zusätze zu verringern und dadurch die Lebensdauer von Glühlampen zu verlängern.

Die FR-A 1 337 937 beschreibt eine Halogenglühlampe mit einem Leuchtkörper aus Tantal und Tantalcarbid, wobei die Füllung als Kohlenstoffquelle beispielsweise Trichlorjodmethan enthalten kann.

Bei Halogenglühlampen mit einem Leuchtkörper aus Wolfram stellt Kohlenstoff als Füllungsbestandteil eher ein notwendiges Übel dar. Gemäß der GB-A 1 327 479 bringt die gleichzeitige Verwendung von Jod und einem der anderen Halogene in Form von entsprechenden, teilweise halogenierten Kohlenwasserstoffen Vorteile im Hinblick auf Verunreinigungen im Wolfram-Leuchtkörper.

Eine aus fertigungstechnischen Gründen bevorzugte Jodverbindung ist $CH_3J$. Die US-A 3 644 773 schlägt vor, den hohen Wasserstoffanteil dieser Verbindung durch Zugabe von Gasen anderer Halogene ($Br_2$, $Cl_2$) zu binden und dadurch aus dem Halogen-Reaktionszyklus zu entfernen.

Bei diesen Zusätzen erfordert jedoch der - relativ zum Halogengehalt- hohe Gehalt an Wasserstoff aus thermodynamischen Gründen einen verhältnismäßig hohen Anteil der halogenhaltigen Substanzen an der Füllung (etwa 1 % des Inertgases), damit der für einen schwärungsfreien Betrieb der Lampen notwendige Wolfram-Halogen-Kreisprozeß in ausreichendem Maße ablaufen kann. Dadurch wird jedoch zwangsläufig auch ein hoher Gehalt an Kohlenstoff in den Lampenkolben eingebracht. Der Kohlenstoff lagert sich am Wendeldraht ab und führt zu dessen Versprödung (Karburierung). Vor allem bei Lampen mit kleinem Durchmesser des Wendeldrahtes führt dies zu einer stark verminderten Stoßfestigkeit. Außerdem ist bei $CH_3J$ eine krebserregende Wirkung nachgewiesen worden.

Der Erfindung liegt die Aufgabe zugrunde, die Karburierung des Wendeldrahtes zu unterbinden, ohne dabei die lange Lebensdauer von Halogenglühlampen zu beeinträchtigen. Gleichzeitig soll das gesundheitliche Risiko verringert werden.

Diese Aufgabe wird erfindungsgemäß dadurch gelöst, daß der Zusatz zum Inertgas einen einzigen halogenierten Kohlenwasserstoff enthält, in dem Jod gebunden ist, wobei dieser Kohlenwasserstoff gleichzeitig noch mindestens ein weiteres Atom aus der Gruppe der Halogene Cl und/oder Br aufweist. Der dadurch ermöglichte vergleichsweise geringe Wasserstoffgehalt der halogenhaltigen Substanzen läßt eine wesentlich sparsamere Dosierung zu (etwa 10-1000 ppm (Vol.)) und somit einen deutlich verringerten Kohlenstoffgehalt der Füllung, wodurch die Stoßfestigkeit erheblich verbessert wird.

Insbesondere bei Lampen, bei denen bisher als einzige halogenhaltige Zusätze zwei Kohlenwasserstoffe verwendet wurden, von denen einer jodiert, der andere chloriert oder bromiert war, ist es jetzt möglich, durch Verwendung eines einzigen Kohlenwasserstoffs, der gleichzeitig jodiert und chloriert oder bromiert ist, die Herstellung dieser Lampen, insbesondere den Füllvorgang, außerordentlich zu vereinfachen. Aufwendige Dosier- und Mischverfahren entfallen, der Zeitaufwand wird reduziert und die Gefahr einer Fremdgaskontamination wird stark verringert.

Besonders niedrig läßt sich der Kohlenstoffgehalt bei Verwendung von Methanderivaten halten. Die absolute Konzentration (entsprechend der obigen relativen Konzentration) liegt dabei vorteilhaft bei $1 \times 10^{-8}$ bis $5 \times 10^{-6}$ Mol pro $cm^3$ Kolbenvolumen. Ein niedrigerer Halogengehalt könnte das vom Wendeldraht abdampfende Wolfram nicht mehr vollständig binden und würde daher zu einer Schwärzung führen. Ein höherer Halogengehalt würde zu einem erhöhten Umsatz an Wolfram führen. Der dadurch erhöhte axiale Transport im Bereich der Wendel würde die Lebensdauer der Wendel einschränken.

Für die meisten Typen von Halogenglühlampen wird im allgemeinen ein Anteil von Jod und leichterem Halogen (Chlor, Brom) von 1:2 bis 2:1, besonders häufig von 1:1, benötigt. Daher ist es besonders vorteilhaft, einen gemischt halogenierten Kohlenwasserstoff mit dem entsprechenden Verhältnis zwischen Chlor (bzw. Brom) und Jod, insbesondere von 1:1, zu verwenden. Der einfachste Kohlenwasserstoff dieser Art ist das Methanderivat Chlorjodmethan $CH_2ClJ$. Sehr gute Ergebnisse lassen sich mit einer absoluten Konzentration von $1-3 \times 10^{-7}$ Mol pro $cm^3$ Kolbenvolumen erzielen.

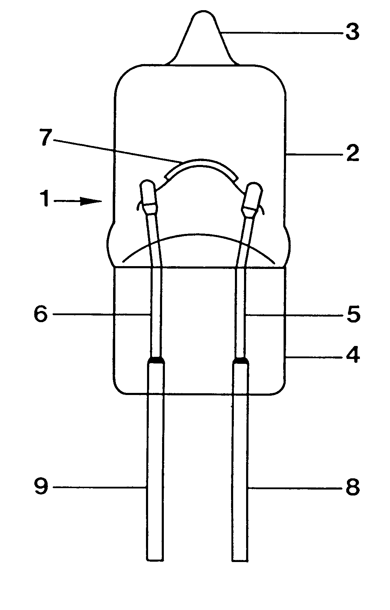

Die Erfindung soll im folgenden näher erläutert werden. Es zeigt die einzige Figur ein Ausführungsbeispiel einer Halogenglühlampe gemäß der Erfindung. Die Figur zeigt eine Halogenglühlampe 1 mit einem Kolben 2 aus Hartglas (Durchmesser 9 mm, Kolbenvolumen ca. 0,25 $cm^3$), an dessen Spitze der Pumpstengel 3 abgeschmolzen ist. Der Kolben 2 ist einseitig gequetscht, wobei in die Quetschung 4 zwei innere Stromzuführungen 5, 6 aus Molybdän vakuumdicht eingeschmolzen sind. Zwischen ihnen ist im Kolben 2 der Leuchtkörper 7 aus gewendeltem Wolframdraht (Durchmesser 40 µm) gespannt. Um einen sicheren Kontakt mit der externen Spannungsquelle zu gewährleisten, schließen sich an die inneren Stromzuführungen 5, 6 nach außen hin zwei Kontaktstifte 8, 9 aus einer Fe-Ni-Cr-Legierung an. Die Gesamtlänge der Lampe beträgt etwa 30 mm. Für diesen Lampentyp werden, abhängig von der Anwendung, mehrere Füllungen eingesetzt.

1. Füllungsbeispiel

Lampen für LCD-Anzeige (12 V) mit einer Leistung von 5 W wurden mit 13300 hPa Xenon und einem Zusatz von $1,6 \times 10^{-7}$ Mol pro $cm^3$ $CH_2ClJ$ gefüllt. Während einer Betriebsdauer von 3500 Stunden konnte keine Schwärzung nachgewiesen werden.

2. Füllungsbeispiel

Positionslampen für Boote (12 V) mit einer Leistung von 5 W wurden mit 6700 hPa Xenon und einem Zusatz von $1 \times 10^{-7}$ Mol pro $cm^3$ $CH_2ClJ$ gefüllt. Während einer Betriebsdauer von 600 Stunden konnte keine Schwärzung nachgewiesen werden.

3. Füllungsbeispiel

Niedervolthalogenglühlampen (12 V) mit einer Leistung von 10 W wurden mit 13300 hPa Xenon und einem Zusatz von $1,6 \times 10^{-7}$ Mol pro $cm^3$ $CH_2ClJ$ gefüllt. Während einer Betriebsdauer von 3000 Stunden konnte keine Schwärzung nachgewiesen werden.

Im Vergleich zu Lampen mit konventioneller Füllung (Xenon mit Zusatz aus $CH_2Br_2$ und $CH_3J$) konnte bei allen drei Ausführungsbeispielen der Fehleranteil von nicht brennfähigen Lampen (gebrochener Leuchtkörper aufgrund von Karburierung) auf 10-20 % gesenkt werden.

Die Anwendung der Erfindung ist nicht auf diese Beispiele beschränkt. Es können auch Quarzglaskolben mit einer Folieneinschmelzung sowie Lampen mit mehreren Leuchtkörpen verwendet werden. Als Inertgas werden auch Krypton und Mischungen, die neben Edelgas auch Anteile an Stickstoff enthalten, verwendet. Neben $CH_2ClJ$ ist insbesondere auch die Verwendung von $CHCl_2J$, $CHClJ_2$, $CHClBrJ$ und $CH_2BrJ$ vorteilhaft. Unter speziellen Bedingungen ist auch die Verwendung von Äthanderivaten wegen ihrer verfahrenstechnischen Vorteile angezeigt. Teilweise werden auch andere halogenhaltige Substanzen zusätzlich verwendet.

Die genaue Zusammensetzung und Dosierung des Halogenanteils am Füllgas hängt von sehr vielen Faktoren ab, insbesondere von der Glasart und Geometrie des Lampenkolbens und den Betriebstemperaturen.

**Patentansprüche**

1. Halogenglühlampe mit einem transparenten, vakuumdicht verschlossenen Kolben und mit einem oder mehreren Leuchtkörpern aus Wolfram sowie mit einer Füllung aus Inertgas und einem Zusatz, der in Form eines oder mehrerer halogenierter Kohlenwasserstoffe und ggf. auch anderer halogenhaltiger Verbindungen eingegeben ist, wobei als Halogene Jod sowie Brom und/oder Chlor vorhanden sind, dadurch gekennzeichnet, daß der Zusatz einen einzigen halogenierten Kohlenwasserstoff enthält, in dem Jod gebunden ist, wobei dieser Kohlenwasserstoff gleichzeitig noch mindestens ein weiteres Atom aus der Gruppe der Halogene Chlor und/oder Brom aufweist.

2. Halogenglühlampe nach Anspruch 1, dadurch gekennzeichnet, daß der jodhaltige halogenierte Kohlenwasserstoff der einzige halogenhaltige Zusatz ist.

3. Halogenglühlampe nach Anpsruch 1, dadurch gekennzeichnet, daß der jodhaltige halogenierte Kohlenwasserstoff ein Methanderivat ist.

4. Halogenglühlampe nach Anspruch 3, dadurch gekennzeichnet, daß die Konzentration des halogenierten Kohlenwasserstoffs $1 \times 10^{-8}$ bis $5 \times 10^{-6}$ Mol pro $cm^3$ Kolbenvolumen beträgt.

5. Glühlampe nach Anspruch 2, dadurch gekennzeichnet, daß der Kohlenwasserstoff Chlorjodmethan ($CH_2ClJ$) ist.

6. Glühlampe nach Anspruch 4, dadurch gekennzeichnet, daß der Anteil von $CH_2ClJ$ an der Füllung $1-3 \times 10^{-7}$ Mol pro $cm^3$ Kolbenvolumen beträgt.

**Claims**

1. Tungsten-halogen lamp having a transparent bulb sealed in a vacuumtight manner, containing one or more tungsten luminous bodies and having an inert gas filling with an additive which is introduced in the form of one or more halogenated hydrocarbons and, optionally, also of other halogen-containing compounds, iodine and bromine and/or chlorine being present as halogens, characterised in that the additive contains a single halogenated hydrocarbon in which iodine is bound, said hydrocarbon also containing in addition at least one further atom from the group comprising the halogens chlorine and/or bromine.

2. Tungsten-halogen lamp according to claim 1, characterised in that the iodine-containing halogenated hydrocarbon is the sole halogen-containing additive.

3. Tungsten-halogen lamp according to claim 1, characterised in that the iodine-containing halogenated hydrocarbon is a methane derivative.

4. Tungsten-halogen lamp according to claim 3, characterised in that the concentration of the halogenated hydrocarbon is $1 \times 10^{-8}$ to $5 \times 10^{-6}$ mol/cm$^3$ of bulb volume.

5. Tungsten-halogen lamp according to claim 2, characterised in that the hydrocarbon is chloroiodomethane (CH$_2$ClI).

6. Tungsten-halogen lamp according to claim 4, characterised in that the proportion of CH$_2$ClI in the filling is 1-3 $\times$ 10$^{-7}$ mol/cm$^3$ of bulb volume.

**Revendications**

1. Lampe à halogène comportant une ampoule transparente fermée d'une manière étanche au vide et un ou plusieurs éléments lumineux en tungstène ainsi qu'un remplissage formé par un gaz inerte et un additif, qui est introduit sous la forme d'un ou plusieurs hydrocarbures halogénés et éventuellement également d'autres composés halogénés, et dans laquelle il est prévu, comme halogènes, de l'iode ainsi que du brome et/ou du chlore, caractérisée par le fait que l'additif contient un seul hydrocarbure halogéné, dans lequel l'iode est lié, ledit hydrocarbure comportant en outre simultanément au moins un autre atome du groupe des halogènes chlore et/ou brome.

2. Lampe à halogène suivant la revendication 1, caractérisée par le fait que l'hydrocarbure halogéné, qui contient de l'iode, est le seul additif halogéné.

3. Lampe à halogène suivant la revendication 1, caractérisée par le fait que l'hydrocarbure halogéné, qui contient de l'iode, est un dérivé du méthane.

4. Lampe à halogène suivant la revendication 3, caractérisée par le fait que la concentration de l'hydrocarbure halogéné contient entre $1 \times 10^{-8}$ et $5 \times 10^{-6}$ mole par cm$^3$ de volume de

l'ampoule.

5. Lampe à halogène suivant la revendication 2, caractérisée par le fait que l'hydrocarbure est du chloroiodo-méthane (CH$_2$ClI).

6. Lampe à halogène suivant la revendication 4, caractérisée par le fait que le pourcentage de CH$_2$ClI dans le remplissage est compris entre $1 \times 10^{-7}$ et $3 \times 10^{-7}$ mole par cm$^3$ du volume de l'ampoule.